# EUROPEAN PATENT SPECIFICATION

(11) **EP 2 857 227 B1**
(45) Date of publication and mention of the grant of the patent: **06.01.2021**
(21) Application number: 13793840.3
(22) Date of filing: 04.04.2013
(51) Int. Cl.: B60C 19/00, G01M 17/02, B60C 11/24

(54) **METHOD AND APPARATUS FOR DETECTING UNEVEN WEAR ON TIRE**
VERFAHREN UND VORRICHTUNG ZUR ERKENNUNG DER UNGLEICHMÄSSIGEN ABNUTZUNG EINES REIFENS
PROCÉDÉ ET DISPOSITIF DE DÉTECTION D'USURE IRRÉGULIÈRE SUR UN PNEUMATIQUE

(30) Priority: 24.05.2012 JP 2012118945
(43) Date of publication of application: 08.04.2015
(73) Proprietor: Bridgestone Corporation, Tokyo 104-8340 (JP)
(72) Inventor: MASAGO Takeshi, Kodaira-shi Tokyo 187-8531 (JP)
(74) Representative: Oxley, Robin John George
(86) International application number: PCT/JP2013/060274
(87) International publication number: WO 2013/175871

(56) References cited:
- EP-A1- 2 172 760
- JP-A- 2007 153 034
- JP-A- 2009 018 667
- JP-A- 2009 292 283
- JP-A- 2011 168 211

## Description

### BACKGROUND OF THE INVENTION

### 1. Field of the Invention

The present invention relates to a method and apparatus for detecting uneven wear in the edge of the shoulder of a tire tread from output signals of an acceleration sensor disposed on the inner surface of the tire tread.

### 2. Description of the Related Art

A tire becomes worn on the tread surface due to its friction with the road surface as it runs thereon. From the viewpoint of tire performance, it is desirable that the tread surface wears away evenly and thus the shape of the contact patch (footprint) of the tire does not change much. However, there are cases where a difference in the amount of wear results between the central part and the shoulder portion of the tire tread because the lateral and fore-aft forces in relation to the traveling direction of the tire work at the time of cornering, acceleration, and deceleration.

As these uneven wears accumulate, a tire may have an extremely worn edge of the shoulder portion. The tire with an advanced uneven wear like this is called an unevenly worn tire in contrast to a normally worn tire which has an evenly worn surface of the tread.

A tire having an extreme uneven wear, if it is continued to be used, may eventually fail to deliver its primary performance. Especially with a winter tire, a problem that frequently occurs is a lost grip on the road surface.

Also, an unevenly worn tire has a shape of the contact patch that is not ideal. Hence, such a tire will experience a greater loss of fuel economy performance than a normally worn tire having an evenly worn tread surface.

In a conventionally known method, the state of wear on a tire is detected using the output signals of an acceleration sensor disposed on the inner surface of the tire tread. In this method, acceleration waveforms in the radial direction of the tire are detected using the acceleration sensor disposed at the axial center on the inner liner of the tire. Then the acceleration waveform is extracted from one or both of the "leading end region", which is the region corresponding to the time interval ΔT between the peak near the leading end and the peak near the trailing end preceding the time Tₘ which is the middle point between the peak near the leading end and the peak near the trailing end and the "trailing end region", which is the region corresponding to the time interval ΔT following the time Tₘ. Then the acceleration waveform is subjected to a frequency analysis, and the frequency spectrum thus obtained is used to calculate the frequency band value, which is the magnitude of acceleration of a specific frequency band. And the degree of progress of tire wear is detected by comparing the calculated frequency band value against a predetermined threshold value (see Patent Document 1, for instance).

Also, in another method for detecting the state of wear on a tire, sensing elements, which may each consist of a magnetic material or conductive rubber, are buried in the grooves in the tire tread or inside the tread rubber, and a sensor is disposed on the vehicle body. And the wear on the tire is estimated from the changes in the signals detected by the sensor as the sensing elements wear away along with the abrasion of the tire (see Patent Document 2, for instance) . And in still another method, a smelly gas or colored gas is sealed inside a tire in advance. And the wear on the tire is made known as the smelly gas or colored gas is released into the air when the gas trapped inside is exposed as the wear on the tread advances (see Patent Document 3, for instance).

Attention is drawn to the disclosures of EP2172760, US2011118989 and JP2011-168211.

### RELATED ART DOCUMENT

### Patent Document

Patent Document 1: Japanese Unexamined Patent Application No. 2009-18667
Patent Document 2: Japanese Unexamined Patent Application No. 2003-214808
Patent Document 3: Japanese Unexamined Patent Application No. 2005-28950

### SUMMARY OF THE INVENTION

### Problem to be Solved by the Invention

However, the method as described in Patent Document 1 is not a method effective in accurately detecting a local wear in the tire shoulder, such as shoulder edge wear, although it may be effective in detecting the progress of general wear on a new tire.

Also, the methods as described in Patent Document 2 and Patent Document 3 rely on the introduction of foreign objects like magnetic material or gas into the tire tread, which can cause some fault, thus impairing the durability of the tire.

The present invention has been made in view of the foregoing problems, and an object thereof is to provide a method and apparatus for accurately detecting a shoulder edge wear without impairing the durability of a tire.

### Means for Solving the Problem

The present invention provides a method for detecting uneven wear on a tire from an acceleration waveform detected by an acceleration sensor, as defined by claim 1. Further, an apparatus for detecting uneven wear on a tire is provided with the features of claim 6.

### BRIEF DESCRIPTION OF THE DRAWINGS

FIG. 1 is a diagram showing a constitution of an uneven tire wear detecting apparatus according to an embodiment of the invention.
FIG. 2 is an illustration showing an example of installation of an acceleration sensor.
FIG. 3 is a diagram showing an example of a radial acceleration waveform of a tire.
FIG. 4 is a diagram showing frequency spectrums of radial acceleration in the post-trailing-end region.
FIG. 5 is an illustration showing a state of a shoulder edge wear.
FIG. 6 is a diagram showing a contact pressure distribution in the circumferential direction in the central part of a tire. FIG. 7 is diagrams showing examples of frequency spectrums of radial acceleration in the pre-leading-end region and frequency spectrums of radial acceleration in the continuous region including contact patch, respectively.
FIG. 8 is diagrams showing frequency spectrums of radial acceleration of tires (60 km/hr).
FIG. 9 is diagrams showing frequency spectrums of radial acceleration of tires (80 km/hr).
FIG. 10 is diagrams showing relationships between speed, load and frequency band value.

### BEST MODE FOR CARRYING OUT THE INVENTION

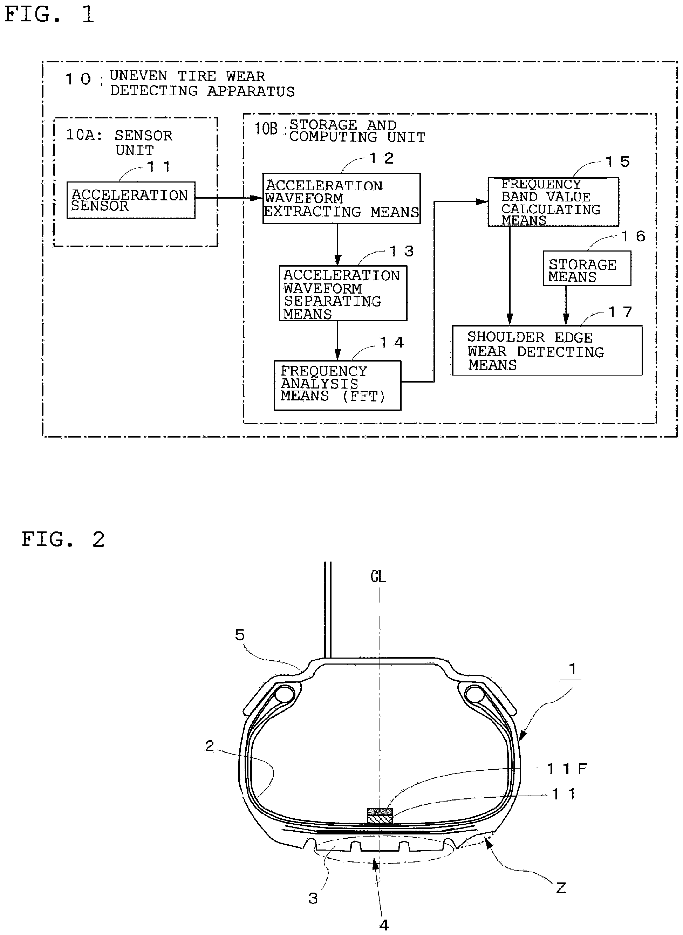

FIG. 1 is a functional block diagram showing a constitution of an uneven tire wear detecting apparatus 10. In the figure, reference numeral 11 denotes an acceleration sensor, 12 an acceleration waveform extracting means, 13 an acceleration waveform separating means, 14 a frequency analysis means, 15 a frequency band value calculating means, 16 a storage means, and 17 a shoulder edge wear detecting means.

The acceleration sensor 11, as shown in FIG. 2, is disposed on the inner liner 2 at the axial center of the tire 1 indicated by CL such that the detection is made in the radial direction of the tire 1. And the acceleration sensor 11 detects the acceleration in the radial direction of the tire 1 that acts on the inner surface of the central part 4 of the tire tread 3.

The acceleration sensor 11 constitutes the sensor unit 10A of the uneven tire wear detecting apparatus 10, whereas the respective means from the acceleration waveform extracting means 12 to the shoulder edge wear detecting means 17 constitute the storage and computing unit 10B thereof.

The means constituting the storage and computing unit 10B are constructed by computer software, for instance, and disposed on the vehicle body. Note also that the storage means 16 is constituted by a memory such as RAM.

Also, as an arrangement for sending the output signals from the acceleration sensor 11 to the computing unit 10B, it is preferable that a transmitter 11F is disposed on the inner liner 2 as shown in FIG. 2 or on the wheel 5 and the output signals from the acceleration sensor 11 are amplified by a not-shown amplifier and then transmitted wirelessly to the computing unit 10B disposed on the vehicle body. Note that the arrangement may also be such that the computing unit 10B is disposed on the tire 1 and the results of detection by the shoulder edge wear detecting means 17 are transmitted to a not-shown vehicle control unit provided on the vehicle body.

The acceleration waveform extracting means 12 extracts an acceleration waveform, which is a time-series waveform of acceleration in the radial direction of the tire (radial acceleration) near the contact patch at the central part 4 of the tire tread 3, from the signals outputted from the acceleration sensor 11 indicating the magnitude of the radial acceleration acting on the central part 4.

The acceleration waveform separating means 13 extracts a regional acceleration waveform, which is an acceleration waveform in the post-trailing-end region, by separating it from the acceleration waveform extracted by the acceleration waveform extracting means 12.

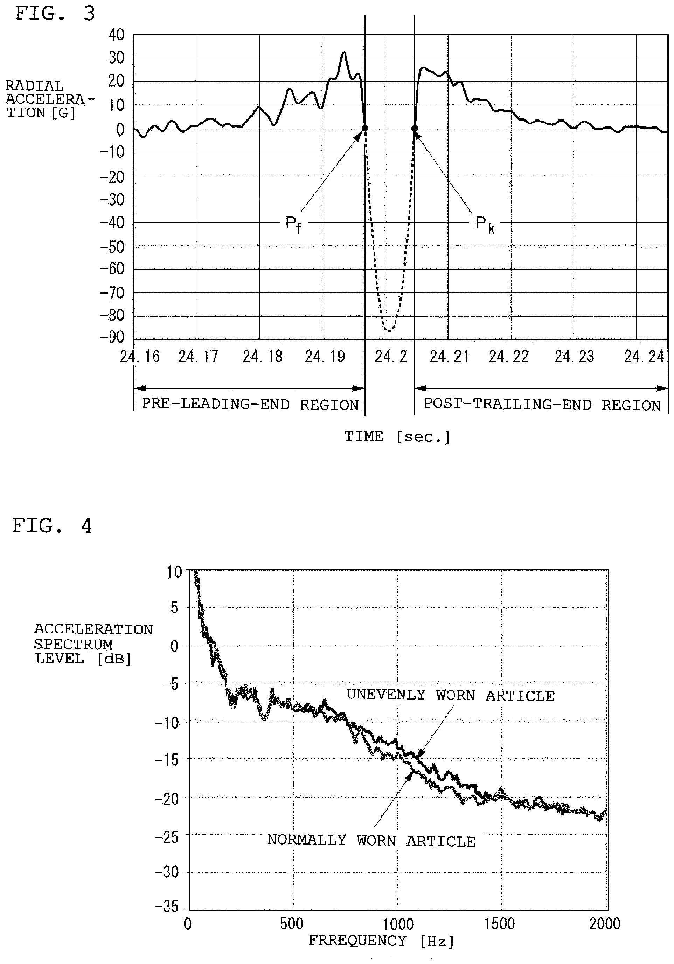

FIG. 3 is a diagram showing an example of a radial acceleration waveform detected by the acceleration sensor 11. The horizontal axis represents time (sec.), and the vertical axis the magnitude of radial acceleration (G).

In the radial acceleration waveform, as shown in FIG. 3, the acceleration becomes 0 at the leading-end point P_{f} and the trailing-end point Pₖ. Hence, the acceleration waveform separating means 13 extracts an acceleration waveform in a time region after the trailing-end point Pₖ from the radial acceleration waveform and sends this as a regional acceleration waveform to the frequency analysis means 14.

When the acceleration waveform in the pre-leading-end region is to be used as the regional acceleration waveform, it should be so arranged that an acceleration waveform in a time region before the leading-end point P_{f} is extracted and used as the regional acceleration waveform.

It is to be noted that the positions of the leading-end point P_{f} and the trailing-end point Pₖ can be determined with greater accuracy from the positions of two peaks (leading-end peak and trailing-end peak) appearing in the acceleration differentiated waveform derived by differentiating the radial acceleration waveform.

The frequency analysis means 14 computes a frequency spectrum of regional acceleration by performing a Fast Fourier Transform (FFT) on the regional acceleration waveform (time-series waveform) which is an acceleration waveform in the post-trailing-end region.

FIG. 4 is a diagram showing examples of frequency spectrums of regional acceleration. The horizontal axis represents frequency [Hz], and the vertical axis the magnitude of radial acceleration (acceleration spectrum level) [dB]. In the figure, the data of higher acceleration spectrum level in the band of 800 to 1500 Hz represents that of a tire having a shoulder edge wear (hereinafter referred to as "unevenly worn article"), and the data of lower acceleration spectrum level there that of a tire having no uneven wear (hereinafter referred to as "normally worn article").

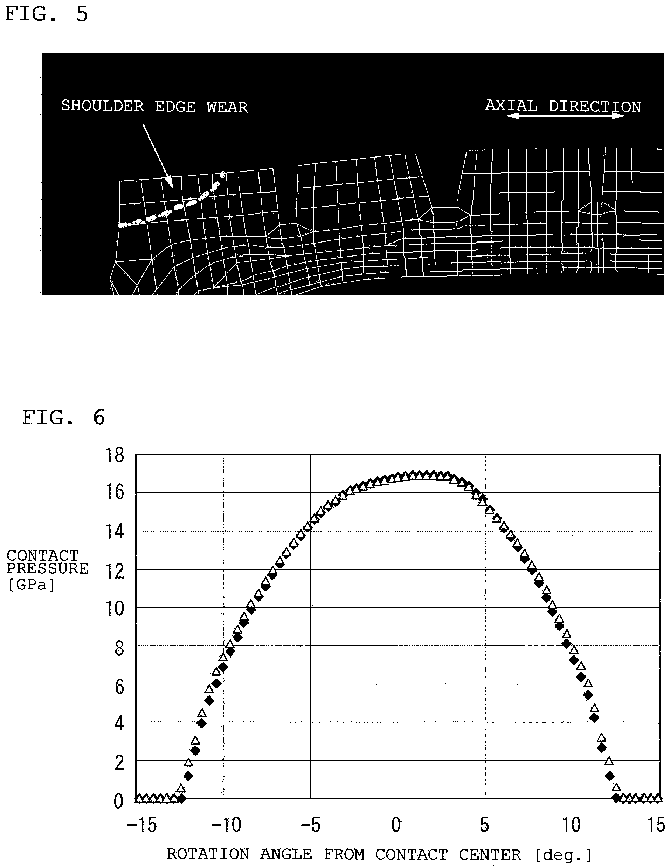

The unevenly worn article, as shown in FIG. 5, refers to a tire with rubber missing on the treading surface side of the curve in a thick broken line as a result of excessive wear in the edge on the axially outer side of the shoulder block.

FIG. 6 is a diagram showing a circumferential contact pressure distribution in the central part 4 of a tire. The horizontal axis represents the rotation angle from the contact center (as seen from the axial direction of the tire) (deg), and the vertical axis the contact pressure (GPa). Also, the rhomboid-shaped marks in the figure represent the data of the normally worn article, and the triangle-shaped marks the data of the unevenly worn article.

As is clear from the comparison between the contact pressure distribution of the normally worn article and the contact pressure distribution of the unevenly worn article, the unevenly worn article shows higher pressure values nearer the ends of the contact patch. The higher pressure values nearer the ends of the contact patch may be a cause of a rise in the extra-contact-patch high-frequency wave level. Accordingly, the acceleration waveform in the pre-leading-end region or the acceleration waveform in the post-trailing-end region of the unevenly worn article shows a higher vibration level in the frequency band including the extra-contact-patch high-frequency waves than the acceleration waveform in the pre-leading-end region or the acceleration waveform in the post-trailing-end region of the normally worn article.

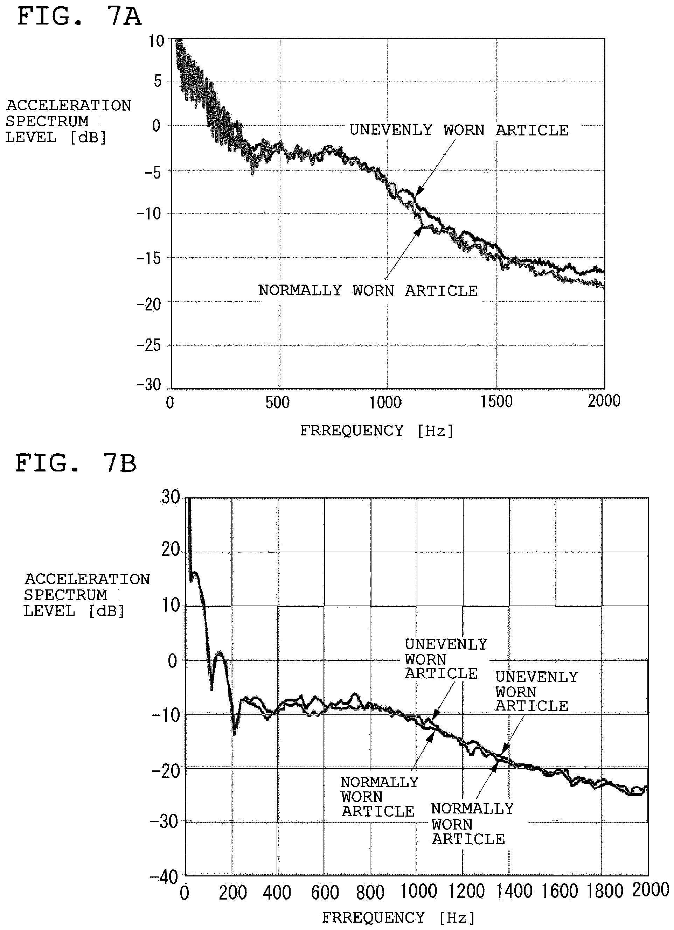

FIG. 7A represents frequency spectrums obtained by performing a Fast Fourier Transform (FFT) on acceleration waveforms in the pre-leading-end region. FIG. 7B represents frequency spectrums obtained by performing an FFT on the frequency spectrums of radial acceleration in the continuous region including contact patch.

As is clear from the comparison between FIG. 4 and FIGS. 7A and 7B, the frequency spectrums of acceleration waveform in the pre-leading-end region or the post-trailing-end region show greater difference in acceleration spectrum level between the unevenly worn article and the normally worn article than the frequency spectrums of radial acceleration in the continuous region including contact patch.

The frequency band value calculating means 15 calculates the acceleration spectrum level which is the vibration level in a specific frequency band of the frequency spectrum of regional acceleration and sends the calculated value as the frequency band value T to the shoulder edge wear detecting means 17.

The storage means 16 stores the reference frequency band value T₀ which is a predetermined frequency band value of a normally worn tire without uneven wear in the edge of the shoulder thereof.

The tire for setting the reference band value (normally worn tire) may be prepared as follows, for instance. First, in an indoor testing, a tire is operated under conditions that will cause significant uneven wear in the shoulder, and the time (or distance) is measured until the uneven wear occurs in the shoulder. Then another tire is operated under conditions that will not cause uneven wear for the same time duration (or distance), and this tire may be used as the normally worn tire.

The shoulder edge wear detecting means 17 determines whether a shoulder edge wear has occurred or not by comparing the frequency band value T calculated by the frequency band value calculating means 15 against the reference frequency band value T₀.

Now a description is given of a method for detecting an uneven wear on a tire.

First an acceleration in the radial direction of a tire (radial acceleration) at the central part 4 of the inner surface of the inner liner 2 which deforms along with the deformation of the tire tread 3 is detected by an acceleration sensor 11. Then the data of the detected radial acceleration is transmitted from a transmitter 11F to a computing unit 10B disposed on the vehicle body.

The computing unit 10B extracts an acceleration waveform, which is a time-series waveform of the radial acceleration near the contact patch of the tire, from the output signals of the acceleration sensor 11, then separates a regional acceleration waveform from the acceleration waveform, and determines whether a shoulder edge wear has occurred on the tire 1 or not, using the extracted regional acceleration waveform.

More specifically, the frequency band value T, which is the magnitude of radial acceleration in a specific frequency band of the frequency spectrum of regional acceleration obtained by an FFT on the regional acceleration waveform, is calculated. And the frequency band value T is compared against the predetermined reference frequency band value (frequency band value of a normally worn tire) T₀ to determine whether a shoulder edge wear has occurred or not.

The occurrence of a shoulder edge wear may, for instance, be determined when the difference between the frequency band value T (dB) and the reference frequency band value T₀ (dB) has surpassed a predetermined threshold value K.

Thus, an uneven wear in the edge of the tire shoulder is detected using a regional acceleration waveform to the exclusion of the acceleration waveform of the contact patch which provides little information on the distinction between normal wear and uneven wear. Therefore, the accuracy in detecting an uneven tire wear can be raised higher than when the whole acceleration waveform near the contact patch is used.

Also, the occurrence of uneven wear can be detected using a single acceleration sensor 11. This will not only simplify the system, but also will accomplish the detection of uneven shoulder wear without impairing the durability of the tire.

Also, the acceleration sensor 11 is disposed at the axial center of the tire tread 3. Therefore, it is possible to detect uneven wear in whichever of the vehicle-side shoulder and the non-vehicle-side shoulder.

Note that the tire for setting the reference band value (normally worn tire) may be prepared by using the following procedure, for instance. First, in an indoor testing, a tire is operated under conditions that will cause significant uneven wear in the shoulder, and the time (or distance) is measured until the uneven wear occurs in the shoulder. Then another tire is operated under conditions that will not cause uneven wear for the same time duration (or distance), and this tire may be used.

A tire having an advanced wear in the tread 3 has shallower grooves and therefore shows higher block rigidity than a new tire. As a result, such a tire has a different region of high-frequency waves occurring outside the contact patch from a new tire. Hence, the detection accuracy will be improved if the frequency band value T₀ of a normally worn tire is applied as in this embodiment.

In the foregoing embodiment, the radial acceleration of a tire is used, but the circumferential acceleration or the axial acceleration of a tire may be used instead. However, when the circumferential acceleration of a tire is used, the output signals of the acceleration sensor 11 will contain the natural resonance frequency components of tread blocks. As a result, the detection accuracy of uneven wear will become a little lower than when the radial acceleration is used. Also, when the axial acceleration of a tire is used, the output signals of the acceleration sensor 11 will become smaller than the signals of the radial acceleration, thus causing a drop in the detection accuracy of uneven wear.

Also, in the foregoing embodiment, a frequency band value is obtained from a frequency spectrum obtained by an FFT on an extracted regional acceleration waveform. However, the frequency band value may be obtained from an acceleration waveform containing frequency components of 800 to 1500 Hz only which can be derived by passing a regional acceleration waveform through a bandpass filter.

Also, in the foregoing embodiment, the regional acceleration waveform used is the acceleration waveform extracted from the post-trailing-end region. However, the acceleration waveform in the pre-leading-end region may be used as the regional acceleration waveform.

Also, the arrangement may be such that the acceleration waveforms in both the pre-leading-end region and post-trailing-end region are extracted, and an uneven wear in the edge of the tire shoulder is detected using a leading-end frequency band value T (f) and a trailing-end frequency band value T(k) calculated using the respective regional acceleration waveforms . To be more specific, the occurrence of a shoulder edge wear may be determined when either frequency band value T(f) or frequency band value T(k) exceeds the predetermined reference frequency band value T₀(f) or T₀(k) by a predetermined value or more.

### Example:

A test tire was prepared by installing an acceleration sensor at the axial center on the inner liner of the tire such that the radial direction of the tire becomes the detecting direction. A test vehicle fitted with the test tire was operated at speeds of 40 to 80 km/hr. And frequency spectrums of regional acceleration waveforms were obtained with the storage and computing unit installed on the vehicle body for processing the output signals from the acceleration sensor.

The tire size of the test tire was 315/80R22.5.

The effects of loading were investigated using three types of test vehicle, namely, "unladen vehicle", "half laden vehicle", and "fully laden vehicle". The load of the "unladen vehicle" was 1.9 tons, that of the "half laden vehicle" 2.4 tons, and that of the "fully laden vehicle" 2.85 tons.

As for the frequency spectrums, the frequency spectrum of the leading side region acceleration waveform (hereinafter referred to as the leading side spectrum) and the frequency spectrum of the trailing side region acceleration waveform (hereinafter referred to as the trailing side spectrum) were obtained for a normally worn article and an unevenly worn article having a shoulder edge wear as indicated by Z in FIG. 2, respectively.

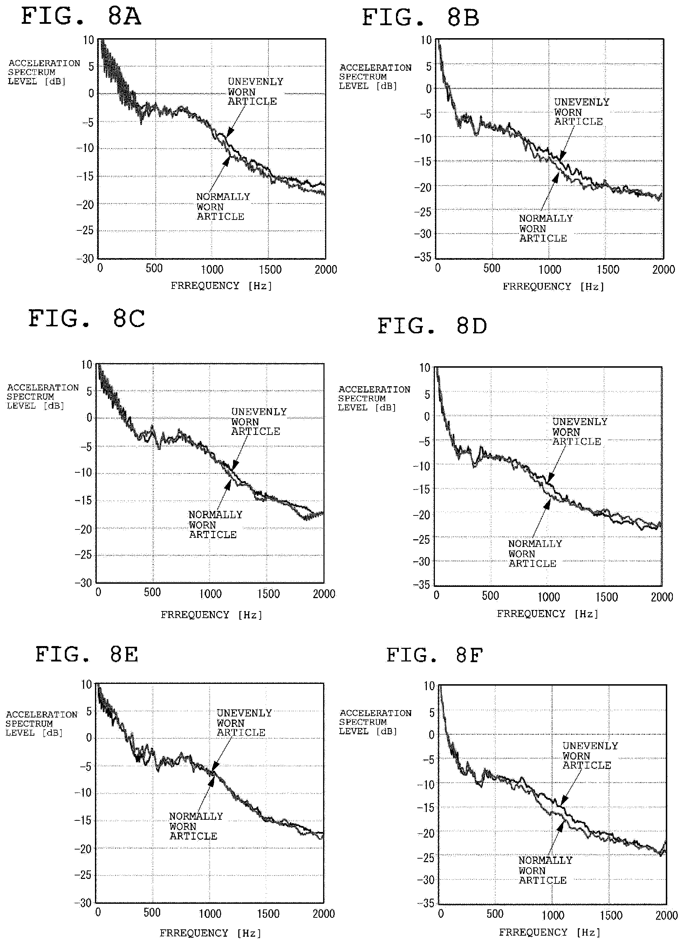

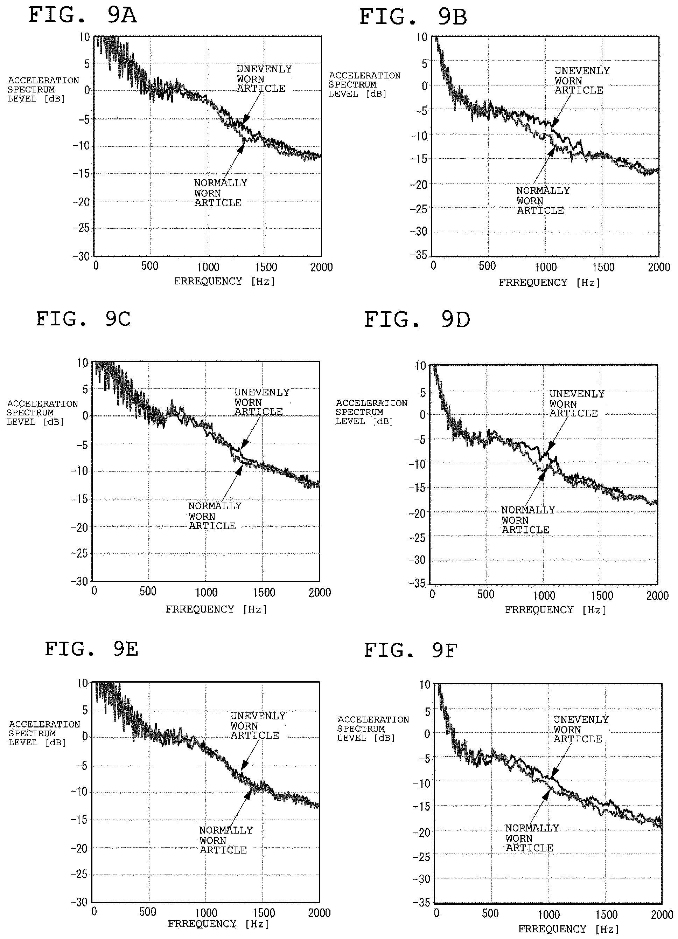

FIG. 8 shows the frequency spectrums when the test vehicle is operated at a speed of 60 km/hr. FIG. 9 shows the frequency spectrums when the test vehicle is operated at a speed of 80 km/hr.

In FIG. 8 and FIG. 9, figure A shows the leading side spectrums when the test vehicle is a fully laden vehicle, figure B the trailing side spectrums when the test vehicle is a fully laden vehicle, figure C the leading side spectrums when the test vehicle is a half laden vehicle, figure D the trailing side spectrums when the test vehicle is a half laden vehicle, figure E the leading side spectrums when the test vehicle is an unladen vehicle, and figure F the trailing side spectrums when the test vehicle is an unladen vehicle.

As is clear from FIG. 8 and FIG. 9, the leading side spectrums are such that in the band of 1000 to 1500 Hz, the acceleration spectrum level of the unevenly worn article is higher than the acceleration spectrum level of the normally worn article. And the trailing side spectrums are such that in the band of 800 to 1200 Hz, the acceleration spectrum level of the unevenly worn article is higher than the acceleration spectrum level of the normally worn article. Also, comparison between the leading side spectrums and the trailing side spectrums indicate that the shoulder edge wear can be detected better by the trailing side spectrums even at lower vehicle speeds and lighter loads.

Also, it is found that the difference between the acceleration spectrum level of the unevenly worn article and the acceleration spectrum level of the normally worn article is greater with the increase in load and speed.

It should be noted that the frequency spectrums at the speed of 40 km/hr were omitted because the level difference between the normally worn article and the unevenly worn article was small.

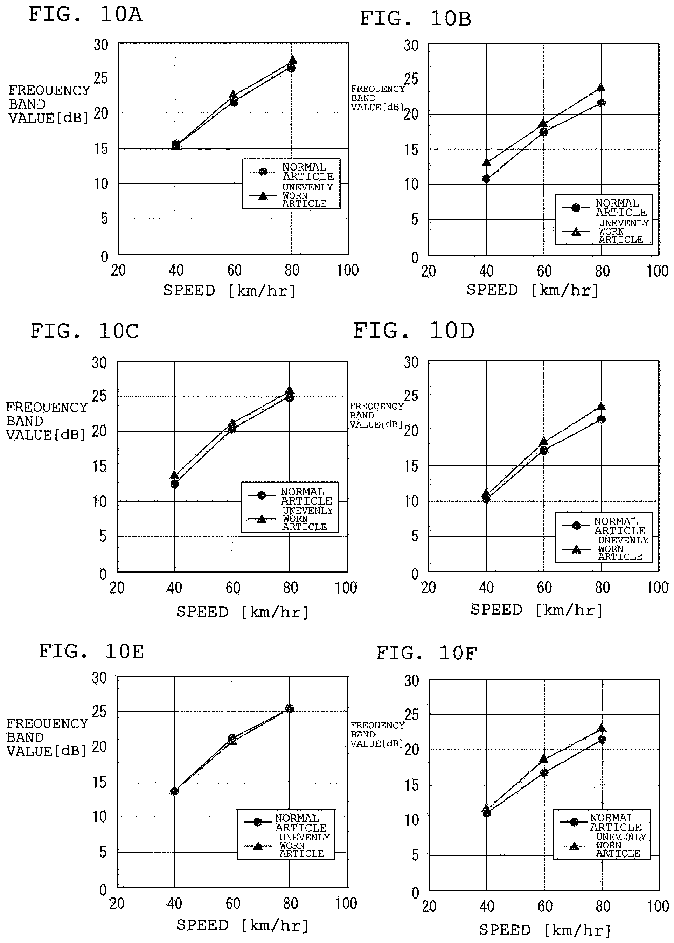

FIG. 10 is diagrams showing relationships between speed and frequency band value. The circles in the figure represent the frequency band values of the normally worn article, and the triangles the frequency band values of the unevenly worn article. And figure A shows the frequency band values of the leading side spectrums when the test vehicle is a fully laden vehicle, figure B the frequency band values of the trailing side spectrums when the test vehicle is a fully laden vehicle, figure C the frequency band values of the leading side spectrums when the test vehicle is a half laden vehicle, figure D the frequency band values of the trailing side spectrums when the test vehicle is a half laden vehicle, figure E the frequency band values of the leading side spectrums when the test vehicle is an unladen vehicle, and figure F the frequency band values of the trailing side spectrums when the test vehicle is an unladen vehicle.

From FIG. 10, too, it is found that the frequency band values of the unevenly worn article are higher than the frequency band values of the normally worn article. Also, as with the frequency spectrums shown in FIG. 8 and FIG. 9, it is found that the frequency band values of the unevenly worn article are higher than the frequency band values of the normally worn article.

Hence, it has been confirmed that the detection accuracy of uneven tire wear can be improved if the uneven wear in the edge of the tire shoulder is detected from the magnitude of frequency band value calculated from the regional acceleration waveform which is the acceleration waveform in the pre-leading-end region or the post-trailing-end region.

In the foregoing specification, the invention has been described with reference to specific embodiments thereof.

### Description of Reference Numerals

- 1: tire
- 2: inner liner
- 3: tire tread
- 4: central part
- 5: wheel
- 10: uneven tire wear detecting apparatus
- 10A: sensor unit
- 10B: computing unit
- 11: acceleration sensor
- 11F: transmitter
- 12: acceleration waveform extracting means
- 13: acceleration waveform separating means
- 14: frequency analysis means
- 15: frequency band value calculating means
- 16: storage means
- 17: shoulder edge wear detecting means
- CL: center line

## Claims

1. A method for detecting uneven wear on a tire (1) from an acceleration waveform detected by an acceleration sensor (11), the method comprising:
(a) extracting an acceleration waveform in either one or both of a pre-leading-end region in a time region before a leading-end point (P_{f}) and a post-trailing-end region in a time region after a trailing-end point (Pₖ) from output signals of the acceleration sensor (11) disposed on an inner surface of a tire tread (3);
(b) calculating a frequency band value, which is a magnitude of acceleration in a specific frequency band, from the extracted acceleration waveform; and
(c) detecting an uneven wear in an edge of a tire shoulder from a magnitude of the calculated frequency band value.

2. The method for detecting uneven wear on a tire (1) as recited in claim 1, wherein the specific frequency band is 800 Hz to 1500 Hz.

3. The method for detecting uneven wear on a tire (1) as recited in claim 1 or claim 2, wherein the acceleration sensor (11) is disposed at the axial center of the tire tread (3).

4. The method for detecting uneven wear on a tire (1) as recited in any of claims 1 to 3, wherein the acceleration is the acceleration in the radial direction of the tire (1).

5. The method for detecting uneven wear on a tire (1) as recited in any of claims 1 to 4, wherein in (c), an uneven wear in the edge of tire shoulder is detected by comparing the frequency band value calculated in (b) against a predetermined frequency band value of a normally worn tire free from uneven wear.

6. An apparatus (10) for detecting uneven wear on a tire (1) from an acceleration in a radial direction of a tire (1) detected by an acceleration sensor (11), the apparatus (10) comprising:
an acceleration sensor (11) disposed on an inner surface of a tire tread (3) for measuring acceleration in the radial direction of the tire (1):
an acceleration waveform extracting means (12) for extracting an acceleration waveform in either one or both of a pre-leading-end region in a time region before a leading-end point (P_{f}) and a post-trailing-end region in a time region after a trailing-end point (Pₖ) from output signals of the acceleration sensor (11);
a frequency band value calculating means (15) for calculating a frequency band value, which is a magnitude of acceleration in a specific frequency band, from the extracted acceleration waveform;
a storage means (16) for storing a reference frequency band value, which is a predetermined frequency band value of a normally worn tire free from uneven wear in an edge of a tire shoulder; and
an uneven wear detecting means (17) for detecting an uneven wear in the edge of the tire shoulder by comparing the calculated frequency band value against the reference frequency band value.

7. The apparatus (10) as recited in claim 6, wherein the specific frequency band is 800 Hz to 1500 Hz.

8. The apparatus (10) as recited in claim 6 or claim 7, wherein the acceleration sensor (11) is disposed at the axial center of the tire tread (3).

## Patentansprüche

1. Verfahren zum Erkennen von ungleichmäßigem Verschleiß an einem Reifen (1) aus einer Beschleunigungswellenform, die durch einen Beschleunigungssensor (11) erfasst wird, wobei das Verfahren Folgendes umfasst:
(a) Extrahieren einer Beschleunigungswellenform in einem oder beiden von einem Bereich vor einem vorderen Ende in einem Zeitbereich vor einem vorderen Endpunkt (P_{f}) und einem Bereich nach einem hinteren Ende in einem Zeitbereich nach einem hinteren Endpunkt (Pₖ) aus Ausgangssignalen des Beschleunigungssensors (11), der auf einer Innenfläche einer Reifenlauffläche (3) angeordnet ist,
(b) Berechnen eines Frequenzbandwertes, der eine Größe einer Beschleunigung in einem spezifischen Frequenzband ist, aus der extrahierten Beschleunigungswellenform; und
(c) Erkennen eines ungleichmäßigen Verschleißes in einer Kante einer Reifenschulter aus einer Größe des berechneten Frequenzbandwertes.

2. Verfahren zum Erkennen von ungleichmäßigem Verschleiß an einem Reifen (1) nach Anspruch 1, wobei das spezifische Frequenzband 800 Hz bis 1500 Hz beträgt.

3. Verfahren zum Erkennen von ungleichmäßigem Verschleiß an einem Reifen (1) nach Anspruch 1 oder Anspruch 2, wobei der Beschleunigungssensor (11) an der axialen Mitte der Reifenlauffläche (3) angeordnet ist.

4. Verfahren zum Erkennen von ungleichmäßigem Verschleiß an einem Reifen (1) nach einem der Ansprüche 1 bis 3, wobei die Beschleunigung die Beschleunigung in der radialen Richtung des Reifens (1) ist.

5. Verfahren zum Erkennen von ungleichmäßigem Verschleiß an einem Reifen (1) nach einem der Ansprüche 1 bis 4, wobei in (c) ein ungleichmäßiger Verschleiß in der Kante der Reifenschulter durch Vergleichen des in (b) berechneten Frequenzbandwertes mit einem vorbestimmten Frequenzbandwert eines normal verschlissenen Reifens, frei von ungleichmäßigem Verschleiß, erkannt wird.

6. Vorrichtung (10) zum Erkennen von ungleichmäßigem Verschleiß an einem Reifen (1) aus einer Beschleunigung in einer radialen Richtung eines Reifens (1), die durch einen Beschleunigungssensor (11) erfasst wird, wobei die Vorrichtung (10) Folgendes umfasst:
einen Beschleunigungssensor (11), der auf einer Innenfläche einer Reifenlauffläche (3) angeordnet ist, zum Messen einer Beschleunigung in der radialen Richtung des Reifens (1),
ein Beschleunigungswellenform-Extraktionsmittel (12) zum Extrahieren einer Beschleunigungswellenform in einem oder beiden von einem Bereich vor einem vorderen Ende in einem Zeitbereich vor einem vorderen Endpunkt (P_{f}) und einem Bereich nach einem hinteren Ende in einem Zeitbereich nach einem hinteren Endpunkt (Pₖ) aus Ausgangssignalen des Beschleunigungssensors (11),
ein Frequenzbandwert-Berechnungsmittel (15) zum Berechnen eines Frequenzbandwertes, der eine Größe einer Beschleunigung in einem spezifischen Frequenzband ist, aus der extrahierten Beschleunigungswellenform,
ein Speichermittel (16) zum Speichern eines Referenz-Frequenzbandwertes, der ein vorbestimmter Frequenzbandwert eines normal verschlissenen Reifens, frei von ungleichmäßigem Verschleiß in einer Kante einer Reifenschulter, ist, und
ein Erkennungsmittel (17) für ungleichmäßigen Verschleiß zum Erkennen eines ungleichmäßigen Verschleißes in der Kante der Reifenschulter durch Vergleichen des berechneten Frequenzbandwertes gegenüber dem Referenz-Frequenzbandwert.

7. Vorrichtung (10) nach Anspruch 6, wobei das spezifische Frequenzband 800 Hz bis 1500 Hz beträgt.

8. Vorrichtung (10) nach Anspruch 6 oder Anspruch 7, wobei der Beschleunigungssensor (11) an der axialen Mitte der Reifenlauffläche (3) angeordnet ist.

## Revendications

1. Procédé de détection d'une usure irrégulière sur un bandage pneumatique (1) à partir d'une forme d'onde d'accélération détectée par un capteur d'accélération (11), le procédé comprenant:
(a) l'extraction d'une forme d'onde d'accélération dans l'une ou les deux parmi une région de pré-extrémité avant dans une région temporelle avant un point d'extrémité avant (P_{f}) et une région de post-extrémité arrière dans une région temporelle après un point d'extrémité arrière (Pₖ) à partir de signaux de sortie du capteur d'accélération (11) disposé sur une surface interne d'une bande de roulement (3) du bandage pneumatique ;
(b) le calcul d'une valeur de bande de fréquences, constituant une amplitude de l'accélération dans une bande de fréquence spécifique, à partir de la forme d'onde d'accélération extraite ; et
(c) la détection d'une usure irrégulière dans un bord d'un épaulement du bandage pneumatique à partir d'une amplitude de la valeur de bande de fréquences calculée.

2. Procédé de détection d'une usure irrégulière sur un bandage pneumatique (1) selon la revendication 1, dans lequel la bande de fréquences spécifique est comprise entre 800 Hz et 1500 Hz.

3. Procédé de détection d'une usure irrégulière sur un bandage pneumatique (1) selon la revendication 1 ou la revendication 2, dans lequel le capteur d'accélération (11) est disposé au niveau du centre axial de la bande de roulement (3) du bandage pneumatique.

4. Procédé de détection d'une usure irrégulière sur un bandage pneumatique (1) selon l'une quelconque des revendications 1 à 3, dans lequel l'accélération est l'accélération dans la direction radiale du bandage pneumatique (1).

5. Procédé de détection d'une usure irrégulière sur un bandage pneumatique (1) selon l'une quelconque des revendications 1 à 4, dans lequel, lors de l'étape (c), une usure irrégulière dans le bord de l'épaulement du bandage pneumatique est détectée en comparant la valeur de bande de fréquences calculée lors de l'étape (b) avec une valeur de bande de fréquences prédéterminée d'un bandage pneumatique à usure normale, ne présentant pas d'usure irrégulière.

6. Appareil (10) pour détecter une usure irrégulière sur un bandage pneumatique (1) à partir d'une accélération dans une direction radiale d'un bandage pneumatique (1) détectée par un capteur d'accélération (11), l'appareil (10) comprenant :
un capteur d'accélération (11) disposé sur une surface interne d'une bande de roulement (3) du bandage pneumatique, pour mesurer l'accélération dans la direction radiale du bandage pneumatique (1) ;
un moyen d'extraction (12) d'une forme d'onde d'accélération pour extraire une forme d'onde d'accélération dans l'une ou les deux parmi une région de pré-extrémité avant dans une région temporelle avant un point d'extrémité avant (P_{f}) et une région de post-extrémité arrière dans une région temporelle après un point d'extrémité arrière (Pₖ) à partir de signaux de sortie du capteur d'accélération (11) ;
un moyen de calcul (15) d'une valeur de bande de fréquences pour calculer une valeur de bande de fréquences, constituant une amplitude de l'accélération dans une bande de fréquences spécifique, à partir de la forme d'onde d'accélération extraite ;
un moyen de stockage (16) pour stocker une valeur de bande de fréquences de référence, constituant une valeur de bande de fréquences prédéterminée d'un bandage pneumatique à usure normale, ne présentant pas d'usure irrégulière, dans un bord d'un épaulement du bandage pneumatique ; et
un moyen de détection (17) d'une usure irrégulière pour détecter une usure irrégulière dans le bord de l'épaulement du bandage pneumatique en comparant la valeur de bande de fréquences calculée avec la valeur de bande de fréquences de référence.

7. Appareil (10) selon la revendication 6, dans lequel la bande de fréquences spécifique est comprise entre 800 Hz et 1500 Hz.

8. Appareil (10) selon la revendication 6 ou la revendication 7, dans lequel le capteur d'accélération (11) est disposé au niveau du centre axial de la bande de roulement (3) du bandage pneumatique.
